Europäisches Patentamt

European Patent Office

Office européen des brevets

(19)

(11) Publication number: **0 004 189**
**A2**

## (12) EUROPEAN PATENT APPLICATION

(21) Application number: 79300354.2

(22) Date of filing: 08.03.79

(51) Int. Cl.²: **E 04 C 2/38**
**B 29 D 27/04**

(30) Priority: 10.03.78 DK 1067/78
01.05.78 DK 1880/78

(43) Date of publication of application:
19.09.79 Bulletin 79/19

(84) Designated contracting states:
BE CH DE FR GB IT LU NL SE

(71) Applicant: Smedegard, Tommy Lykke Christensen
No. 9 Violvej
DK-6800 Aislev pr. Varde(DK)

(72) Inventor: Smedegard, Tommy Lykke Christensen
No. 9 Violvej
DK-6800 Aislev pr. Varde(DK)

(74) Representative: Ford, Michael Frederick et al,
MEWBURN ELLIS & CO. 70/72 Chancery Lane
London WC2A 1AD(GB)

(54) Sandwich elements, in particular for use as wall, door or ceiling panels in buildings or furniture, a mould for the production of such elements and a method of manufacturing the elements.

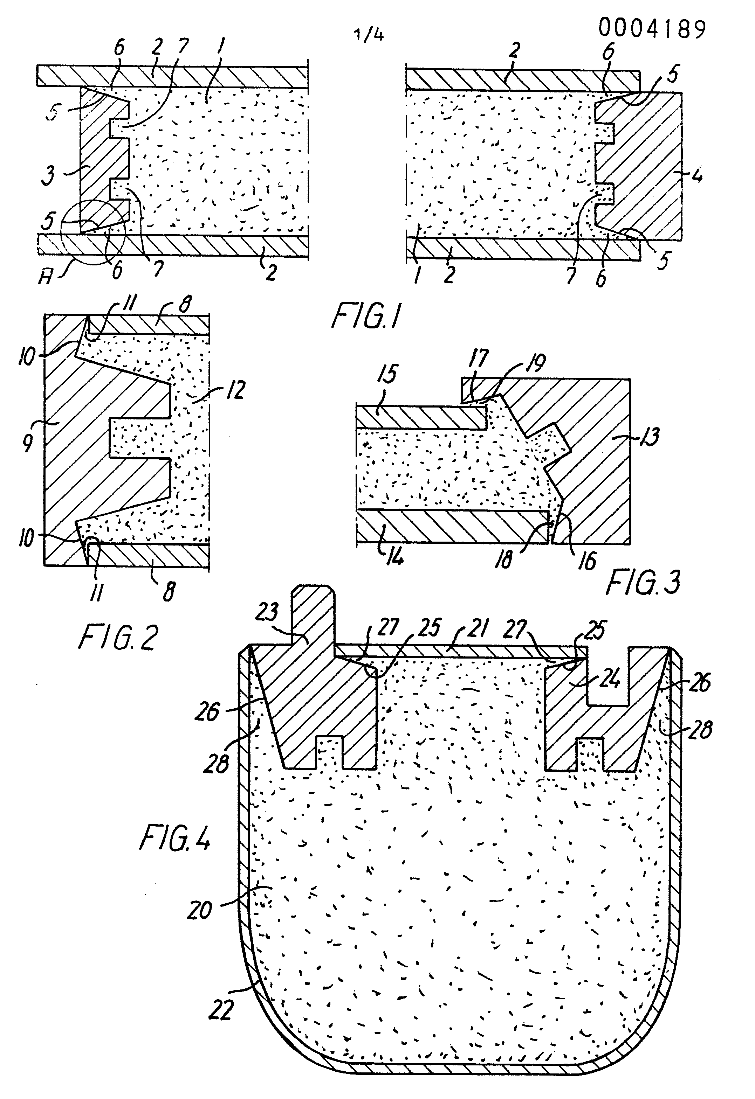

(57) A sandwich element comprises a rigid core (1) enclosed within an envelope which includes two or more facing sheets (2) meeting at the periphery of the element, either directly or with an edge strip (3, 4) interposed therebetween. The core may be foamed or unfoamed, and in either case it consists of or contains a plastics material capable of setting and possessing adhesive properties in its unhardened state. Along the periphery of the element outwardly tapering gaps are formed, either directly between two facing sheets or between a facing sheet and an edge strip, as the case may be. During the manufacture of the element the flowable plastics material of the core penetrates into and through these gaps so that in the finished element it provides a bond between the opposed gap-forming surfaces of the envelope components supplementing the bond effected by the set material between the core and the respective envelope components proper. [Fig. 1].

FIG.1

1

Sandwich elements, in particular for use as wall, door or ceiling panels in buildings or furniture, a mould for the production of such elements and a method of manufacturing the elements.

## BACKGROUND OF THE INVENTION

The present invention relates to a sandwich element comprising a core consisting of or containing a hardened or set plastics material which in unset condition possesses adhesive properties, and an outer envelope adhering to the core and composed of a plurality of separate parts which adjoin one another at the periphery of the sandwich element and which at those places are shaped such that gaps filled up with core material are formed between them.

The invention relates in particular, but not exclusively, to panel-shaped elements for use as wall, door or ceiling elements in the building industry or in the manufacture of furniture, such as cupboards and cabinets.

US Patent Specification No. 3 959 050 discloses a panel-shaped sandwich element with a foamed core and an envelope consisting of two facing sheets and intermediate edge strips or lists. The edge strips are initially connected to form a frame following which one facing sheet is glued to a surface of the frame to form an open cavity. A foamable plastics material is then poured into the cavity which is immediately closed by applying and gluing the other facing sheet to the opposite frame surface before the foaming commences.

British Patent Specification No. 1 406 235 discloses another panel-shaped sandwich element comprising two facing sheets, a frame composed of edge strips and a core of foamed plastics material. The edges of the facing sheets engage in recesses defined between parallel ribs which project from the edge strips towards the centre of the element at the outer and inner sides, respectively, of each facing sheet. During the foaming of the core material the facing sheets are pressed against the outer ribs under the influence of the interior pressure whereby the foam fills up the gaps thus formed between the facing sheets and the inner ribs so that after its setting the foam provides a bonding between the facing sheets and the edge strips in said gaps. This manufacturing technique eliminates two separate operations, viz. gluing the facing sheets to the edge strips, but the edge strips are rather expensive to produce, and since both facing sheets must be inserted in the recesses before the introduction of the foamable material it is necessary to form the edge strips and/or the facing sheets with apertures through which this material can be introduced, and to close these apertures in a subsequent operation.

SUMMARY OF THE INVENTION

According to the invention a sandwich element of the kind initially referred to is distinguished from the elements known from British Patent Specification No. 1 406 235 by the feature that the gaps have wedge-shaped cross-section with decreasing gap width towards the periphery of the sandwich element.

This results in a substantial simplification of the production technique and an improved bonding between the individual parts of the envelope, as effected by the adhesive plastics material of the core. The improved bonding is due to the fact that because of the wedge-shape of the gap the adhesive material can more readily penetrate through the gap to the outer surface of the element and thus obtain contact with the entire area of the opposed, gap-forming surfaces of the envelope parts before it sets. With a gap of constant width throughout its length as disclosed in the British Specification it is very likely that the leading edge of the material flowing into the gap will have set or solidified as a film preventing further penetration of the material, before the gap has been completely filled up. In that case the desired bonding is obtained only on a fraction of the available area of the gap walls.

The manufacture of the sandwich elements according to the invention is easier and cheaper because with foamed core elements including edge strips these strips can be made with a simple profile without ribs and deep recesses, and because it is possible to pour the core material into an open cavity defined by the edge strips and one facing sheet and then apply the second facing sheet before the components are clamped together, e.g. in a press, for carrying out the foaming operation. A further advantage is that no restrictions are imposed on the design of those parts of the element where the facing sheets and edge strips meet, whereby in particular an absolutely smooth transition between the components is possible. The invention also permits the manufacture of panel-shaped elements without edge strips and with non-planar facing sheets the edge zones of which directly define the wedge-shaped gaps between them. One or both facing sheets may e.g. be pyramid-shaped, but the central part of one or each sheet may also have some other three-dimensional shape including convex or concave portions.

In a preferred embodiment of the invention the core consists of a foamed plastics material, such as polyurethane foam. It should be noted, however, that the invention can also advantageously be applied to elements in which the core consists of an unfoamed filler mixed with a suitable plastics material, such as polyurethane, which is adhesive in the liquid state and which is capable of setting or hardening by appropriate treatment, such as the application of heat and/or pressure to the assembled sandwich element. Any suitable organic or inorganic material or mixture of such materials may be used as filler, e.g. materials which are commonly employed for making chipboards.

The optimum value of the angle between the surfaces defining between them the gap or gaps, will to some extent depend on the length of the gap and in planar elements with solid edge strips also on the dimensions of the strips, since a large angle results in a corresponding decrease of the mechanical strength of the strip while a small angle can make it difficult to get a long gap completely filled up with the adhesive material. The value of the angle will preferable be between $10^{\circ}$ and $25^{\circ}$. In elements with edge strips and convex facing sheets the inclination of the edge zones of the sheets may be sufficient to provide a suitable gap angle with a rectangular cross-section of the strips.

It may be expedient to maintain a substantially constant width of 0.2 to 0.5 mm within a narrow zone of the gap adjacent the periphery of the element. This applies especially in case the edge strips do not protrude beyond the facing sheets and thus lack external supporting surfaces which can counteract a possible tendency of a strip to tilt, when the components of the elements are placed in a mould prior to the introduction of the core material.

When the envelope of the sandwich element is formed in part by solid edge strips meeting at corners of the elements, the opposed surfaces of the edge strips at said corners may be shaped such that a gap of outwardly decreasing width is formed therebetween. The core material flowing into these gaps between the edge strips thus acts as a binder between the strips so that it is not necessary to join them together into a rigid frame prior to the pouring of the core material.

The invention also relates to a mould for the production of a sandwich element from a workpiece consisting of two facing sheets, a foamable core material and, if desired, edge strips interposed between edge zones of the facing sheets. The mould comprises a lower mould part, an upper mould part movable relative to the lower mould part, and spacers which when the mould is closed are interposed between the mould parts so as to determine the spacing between said parts and to form the lateral boundaries of a mould cavity for receiving said workpiece. The mould is characterized in that the spacing between the upper and lower mould parts at the periphery of the workpiece is slightly larger than the total thickness of the workpiece at that location.

With this dimensioning of the mould it is ensured that the internal pressure created by the foaming of the core material, besides pressing the facing sheets against the upper and lower mould parts, also creates clearances along the edges of the workpiece, either directly between the facing sheets or between these sheets and the edge strips, as the case may be, and this facilitates the expulsion of air from the mould cavity and the complete filling-up of the wedge-shaped gaps referred to above.

The difference between the spacing of the mould parts and the thickness of the workpiece may be between 0.2 and 1 mm, dependent inter alia on whether one or two gaps are to be filled up by the adhesive material. The optimal width of each gap is believed to be about 0.3 mm.

For facilitating the flow of the adhesive material through the full length of each gap it is preferred to form the mould parts and/or the spacers with recesses along the periphery of the workpiece for receiving excess foam material from the core of the element.

In the surfaces of the mould parts facing the mould cavity there may be apertures which are connectable to a vacuum source through duct systems in the mould parts. This feature ensures an exact positioning of the facing sheets before the mould is closed which is important inter alia if the facing sheets are not otherwise guided, such as by engagement with edge strips. Holding the facing sheets onto the mould parts by suction is also advantageous for making the previously mentioned panel elements having convexly or concavely curved or profiled facing sheets.

Finally the invention relates to a method of manufacturing, in a mould as defined above, a sandwich element of the invention having a non-planar facing sheet. The method is characterized in that prior to the insertion of said facing sheet into the mould one or more weakened lines are formed, e.g. by scoring or embossing, in those regions of the sheet where the surface of the finished element is curved or angled.

### BRIEF DESCRIPTION OF DRAWINGS

Fig. 1 is a longitudinal section through a first embodiment of a panel-shaped sandwich element of the invention, with the central portion broken away,

Fig. 2 is a section through the edge zone of a second embodiment,

Fig. 3 is a corresponding section through a third embodiment,

Fig. 4 is a complete section through a fourth embodiment,

Fig. 5 is a fractional view of a mould for making an element as that shown in Fig. 1,

Fig. 6 is a partly broken-away section through a further panel-shaped element embodying the invention,

Fig. 7 is a cross-section through a modified edge strip for use in elements according to the invention,

Fig. 8 is a section, similar to Figs. 2 and 3, of a further modified embodiment,

Figs. 9 and 9 are a plan view and an elevation of a sandwich element with convex facing sheets,

Figs. 11 and 12 are corresponding views of a different element with convex surfaces,

Figs. 13 and 14 are corresponding views of an element having one flat and one convex-concave surface,

Fig. 15 is an enlarged section through the edge zone of an element according to the invention, in which no edge strips are employed,

Fig. 16 is a highly schematic plan view of a mould embodying the invention,

Fig. 17 is a section on line XVII-XVII of Fig. 16, and

Fig. 18 is an enlarged view of the area marked by an "A" in Fig. 1.

## DETAILED DESCRIPTION

Fig. 1 illustrates a sandwich element which may be designed for use as ceiling panel or room partition in a building, and which comprises a core 1 of foamed plastics material, preferably polyurethane foam, two rectangular facing sheets 2, which may be made of plasterboard, and edge strips or lists along the circumference of the element. Fig. 1 shows two opposed edge strips 3 and 4 shaped and located such that they form a groove and a tongue, respectively, for joining two juxtaposed panels. According to the circumstances the two further edge strips, not shown, may also be protruding and retracted, respectively, relative to the edges of the facing sheets or lie flush therewith.

The two lateral faces 5 of each strip 3 or 4, which are opposed to the inner faces of the adjacent facing sheets 2, are inclined such that a gap 6 of wedge-shaped cross-section is formed between each face 5 and the adjoining sheet 2. The width of the gap decreases uniformly towards its outer end, and as shown the wedge angle of each gap 6 is about $15^{\circ}$. The wedge-shape may extend to the outer lateral surface of the edge strip, but it is preferred that the outer end of the inclined face 5 merges in a narrow surface which is parallel to the sheet 2, and which may be about 2 mm wide. This is illustrated in Fig. 18, in which said narrow surface is designated by 67 while the other reference numerals are the same as in Fig. 1.

During the manufacture, as described below, of a sandwich element in a mould wherein the plastics material of core 1 is foamed in situ while suitable compresion forces are applied transversely of sheets 2, the plastics material, which has not yet set or hardened, will flow out into gaps 6 so that after its solidification it creates a strong bond between the facing sheets and the edge strips. This bond favourably supplements the bond which the foam material effects between the core and the facing sheets and between the core and the edge strips. The latter bond can be further enhanced by forming the edge strips, as shown, with one or more longitudinal grooves 7 which increase the area of contact between the strips and the foam core.

The embodiment of Fig. 2 differs from that of Fig. 1 by having facing sheets 8 which at the periphery of the sandwich element are flush with the edge strips 9. In accordance herewith the edge strips are formed with inclined faces 10 located opposite the edge faces of sheets 8 and defining therewith gaps 11, into which the still flowable, unhardened foam material forming the core 12 of the element, penetrates to effect the desired bond between edge strips and facing sheets.

In the embodiment of Fig. 3 the edge strip 13 is flush with the facing sheet 14 on one face of the sandwich element, corresponding to Fig. 2, while the edge strip overlaps the other facing sheet 15.

Strip 13 is formed with two inclined faces 16 and 17 located opposite the edge face of sheet 14 and the outer surface of sheet 15, respectively, whereby wedge-shaped gaps 18 and 19 similar to the above mentioned gaps 6 and 11 are formed.

Whereas the sandwich elements illustrated in Figs. 2 and 3 are substantially planar or flat with rectilinear edges and thus suitable for use e.g. as doors of a room or a cupboard, Fig. 4 is a section through a rod-like element with partly curved surfaces. Such elements can be used for table or chair legs or as arm rests for chairs. The foamed core 20 of the element is enclosed by an outer envelope comprising two facing or cover sheets 21 and 22 and two reinforcing and connecting bars 23 and 24. Due to the adhesive properties of the core material before its setting the core is intimately bonded to the components of the envelope. As in the previously described embodiments those parts of bars 23, 24, which extend into the core, are formed with faces 25 and 26 which together with the opposed inner surfaces of sheets 21 and 22 define wedge-shaped, outwardly tapering gaps 27 and 28 which during foaming of the core material are filled up by that material which thus ensures a strong and reliable bonding between the individual components of the sandwich element.

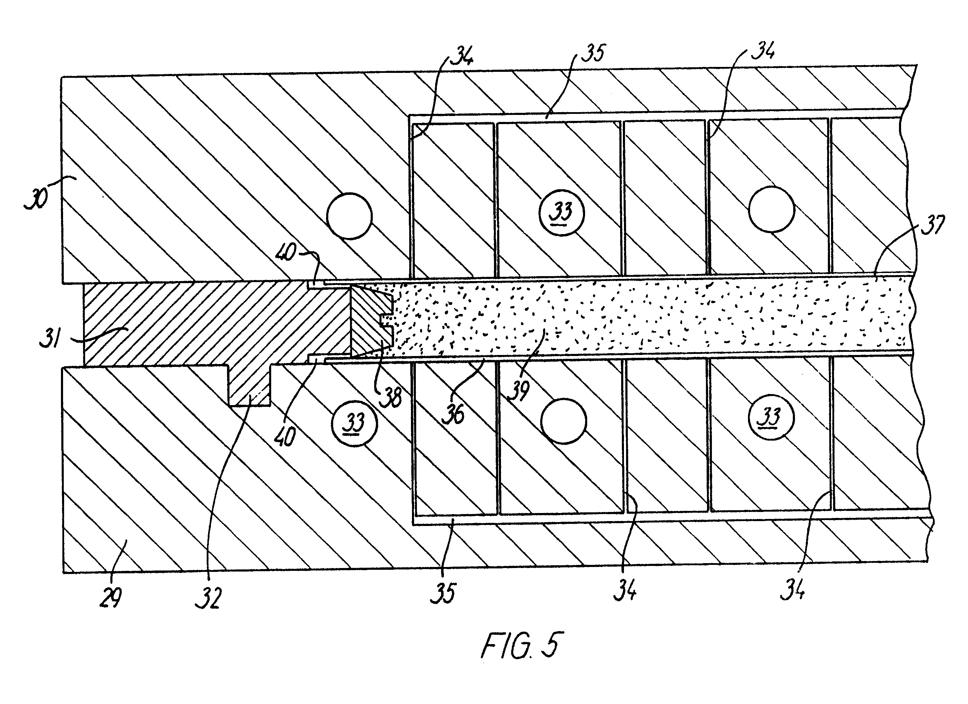

The mould shown very schematically in Fig. 5 is intended for the production of an element as that shown in Fig. 1. The mould comprises a lower mould part 29, an upper mould part 30 and four bar-shaped spacers 31 which together with parts 29 and 30 define a rectangular mould cavity. Spacers 31 are located relative to part 29 by means of guide pins 32. Each mould part 29 and 30 is pierced by ducts 33 through which a heating and/or coolant fluid may flow during the manufacture of a sandwich element, and each mould part further contains a ducting including ducts 34 which open through a plurality of suitably distributed apertures in the surfaces of the mould parts facing the mould cavity, and distributor ducts 35 through which said apertures can be connected to a vacuum source, not shown.

For manufacturing a sandwich element in the mould, upper mould part 30 is first removed, e.g. pivoted or lifted clear of the lower mould part. Next a lower facing sheet 36 and an upper facing sheet 37 for the sandwich element are applied in correct positions against the respective surfaces of the mould parts where they are held by suction through ductings 34, 35. Four edge strips 38 are then put on the lower sheet 37 in contact with the respective spacers 31, and an amount of flowable plastics material 39 sufficient for forming the core of the element is poured into the open cavity defined by sheet 36 and a strip 38. The mould is then closed and kept closed at a suitable clamping pressure while the foaming of material 39 occurs with suitable control of the temperature, as well known in the art.

Advantageously, the height of spacers 31 and thus the spacing between the opposed faces of the mould cavity loacted on the upper and lower mould parts is some tenths of a millimeter greater than the combined height of the facing sheets and the edge strips of the sandwich element. When the foamed material 39 penetrates into the wedge-shaped gaps between sheets 36, 37 and strips 38 the interior pressure prevailing in the material can then press some of the material out through the two clearances occurring along the outer surfaces of the edge strips.

For receiving this excess material there are provided longitudinal recesses or cavities 40 in spacers 31. Dependent on the design of the sandwich element, similar recesses could be provided in the mould parts proper, e.g. for making elements as those shown in Figs. 2 and 3.

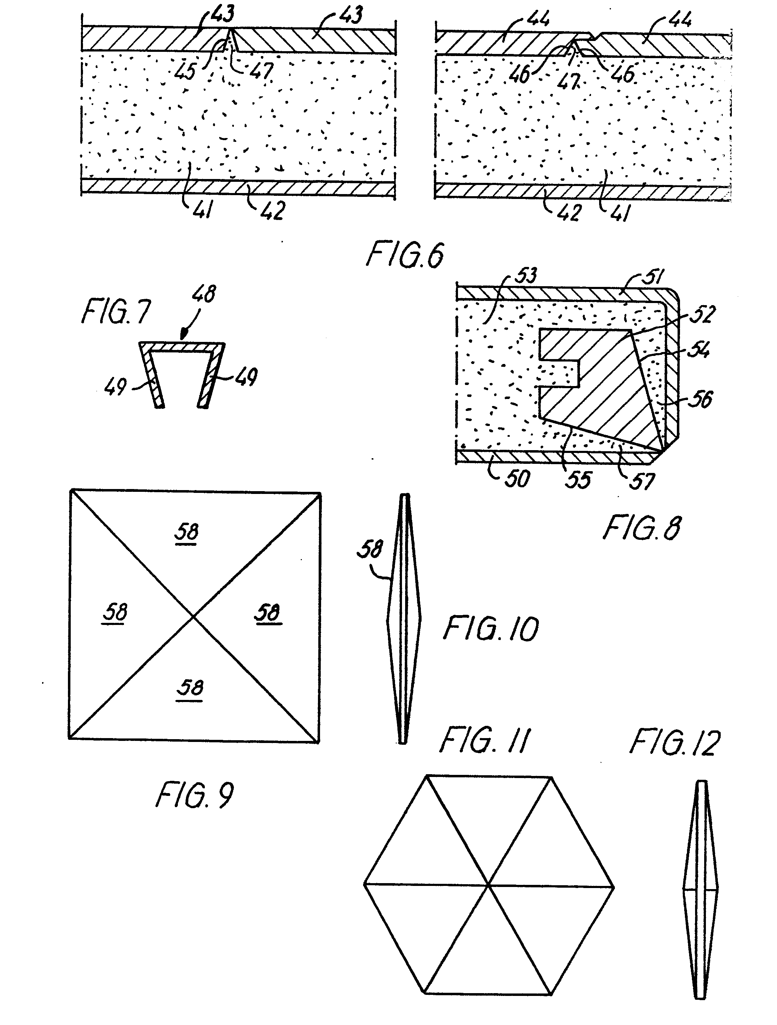

Fig. 6 illustrates a panel-shaped sandwich element, the core 41 of which is enclosed on one face by a continuous facing sheet 42, while the opposite face of the element comprises a plurality of parallel slats 43 and 44. The opposed edge faces 45 and 46, respectively, of adjacent slats are bevelled so that wedge-shaped gaps 47 are formed therebetween. During its foaming the core material penetrates into the gaps and thus supplements the bond between the slats and the cores by an extra bond between the slats.

Whereas all the previously described edge strips are solid, Fig. 7 shows a channel-shaped edge strip 48 having two inclined faces 49 corresponding to the inclined faces 5, 10 etc. of the solid strips. Strip 48 may be made of plastics or metal by extrusion or by rolling an initially flat metal strip.

Fig. 8 illustrates a panel-shaped sandwich element having a flat facing sheet 50, a cup-shaped facing sheet 51 and edge strips 52 which latter are entirely surrounded by the foamed core 53 of the element. As in the previously described embodiments each edge strip 52 has two inclined faces 54 and 55 each located opposite one of the adjoining edge zones of the facing sheets and defining therewith wedge-shaped gaps 56 and 57 with outwardly decreasing gap width.

Figs. 9-14 show three examples of sandwich elements with non-planar faces. These elements can be made in moulds similar to that shown in Fig. 5 when those surfaces of the lower and upper mould parts, which face the mould cavity, are shaped complementary to the desired outer surface of the element. The two opposed facing sheets of the element shown in Figs. 9 and 10 are shaped as four-sided pyramids with triangular sheet portions 58 which may be introduced in the mould either as separate triangles or as a continuous flat sheet which is transformed into pyramid shape only due to the action of the inner pressure resulting from the foaming of the core, possibly supplemented by suction applied through the mould parts. If each facing sheet is made from a continuous piece of veneer, it may be desirable to pre-score the piece along those lines thereon, which will form the edges of the pyramid, and to moisten the veneer to augment its pliability. Larger veneer sheets may be made from a plurality of parallel, longitudinally scarfed webs or lengths, and the edges of the webs should then be curved longitudinally before being joined, in order to provide the necessary excess length of the central area of the deformed sheet relative to the edge zones thereof.

The element shown in Figs. 11 and 12 differs from that of Figs. 9 and 10 only by having facing sheets which are six-sided rather than four-sided pyramids. What has been stated in respect of Figs. 9 and 10 applies similarly.

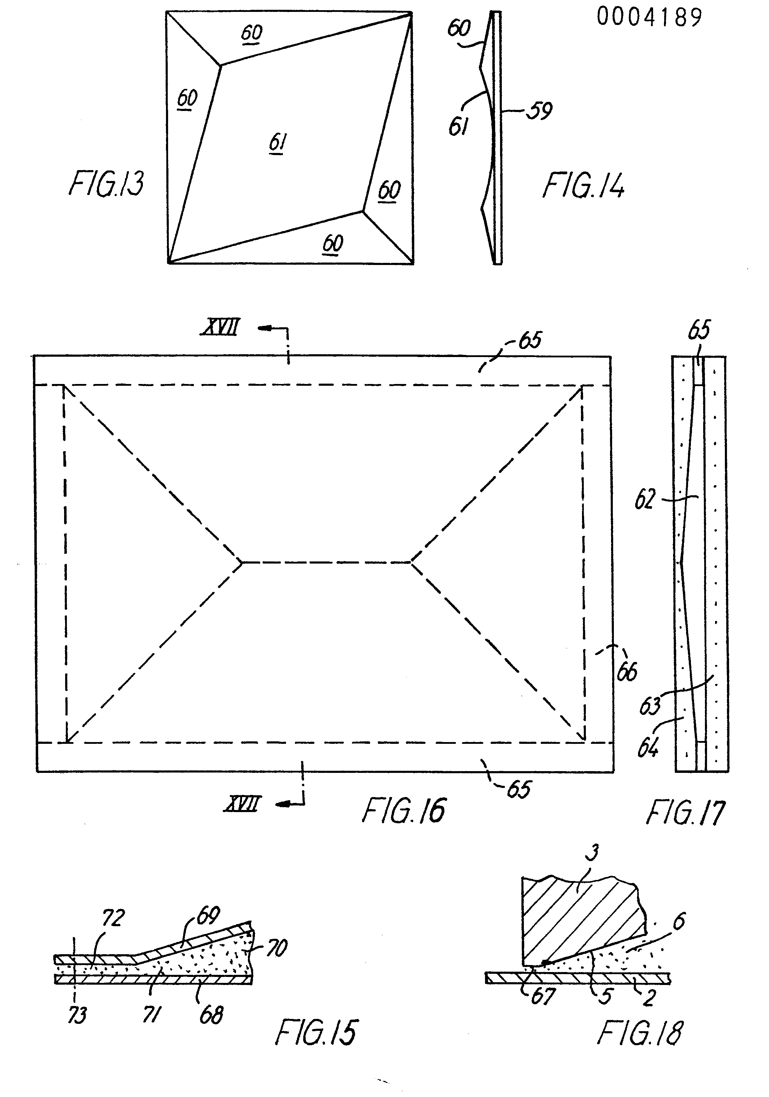

Figs. 13 and 14 show an element having one flat side face 59 while the other side face is composed of four flat triangles 60 and a concave central portion 61.

In embodiments as those shown in Figs. 9-10 with facing sheets or layers the edge zones of which form obtuse angles with the outer surface of the

0004189

adjoining edge strips, the required wedge-shaped gap between the facing sheet and the edge strip can evidently be obtained with an edge strip whose face extending into the core forms an angle of 90$^{\circ}$ or approximately 90$^{\circ}$ with the outer surface whereby the previously mentioned weakening of a solid edge strip occurs only to a minimum extent. Such sandwich elements could alternatively be made entirely without edge strips whereby the opposed facing sheets would meet directly at the edges of the element and directly form the gap into which the core material penetrates during its foaming. This is illustrated by Fig. 15 which shows a section through the edge zone of such a sandwich element like that shown in Figs. 13 and 14 but comprising only two facing sheets 68 and 69 and a foamed core 70. The gap between sheets 68 and 69 includes an inner, outwardly tapering zone 71 and an outer zone 72 of constant width. For the sake of clarity, the width of zone 72 is shown much exaggerated and, as mentioned above, it will normally be 0.5 mm or less.

Such elements can be used e.g. as door panels or in other applications where the element will be let into a groove of a frame so that its edge is invisible. If necessary, the edges of the element may by trimmed - as shown with a dot-and-dash line 73 in Fig. 15 - after setting of the foam. This could also be done with other embodiments of the element in which the facing sheets protrude beyond the edge strips.

Figs. 16 and 17 illustrate very schematically a mould constructed generally as shown in Fig. 5 and designed for making a rectangular sandwich element with one flat surface and an opposed roof-shaped surface. The mould cavity 62 is delimited by a lower mould part 63 having a flat mould surface, an upper mould part 64 having a concave roof-shaped mould surface and two pairs of opposed spacer bars 65 and 66.

While rigid foamed polyurethane is a preferred material for the core of the elements, also other plastics materials having adhesive properties in their flowable state could be employed. The edge strips, if present, can be made of wood, plastics or metal and the facing sheets can be made of several different materials, including veneer and plasterboard as already mentioned, but alternatively also plastics, cardboard, metal sheet or foil, Alu-Kraft, paper, hessian etc.

## PATENT CLAIMS

1. A sandwich element, especially but not exclusively for use as a wall, door or ceiling panel in buildings or furniture, comprising a core (1) consisting of or containing a set plastics material which in unset condition possesses adhesive properties, and an outer envelope adhering to the core and composed of a plurality of separate parts (2, 3, 4) which adjoin one another at the periphery of the sandwich element and which at those places are shaped such that gaps (6) filled up with core material are formed between them, characterized in that the gaps (6) have wedge-shaped cross-section with decreasing gap width towards the periphery of the sandwich element.

2. A sandwich element as claimed in claim 1, characterized in that the core consists of a foamed plastics material, such a polyurethane foam.

3. A sandwich element as claimed in claim 1, characterized in that the angle between the surfaces defining the gap is between $10^{\circ}$ and $25^{\circ}$.

4. A sandwich element as claimed in claim 1, characterized in that in a narrow zone (72) adjacent the periphery of the element the gap has a substantially constant width between 0.2 and 0.5 mm.

5. A sandwich element as claimed in claim 1, in which the envelope comprises solid edge strips meeting at corners of the element, characterized in that the opposed surfaces of the edge strips at said corners are shaped such that a gap of outwardly decreasing width is formed therebetween.

6. A mould for the production of a sandwich element from a workpiece consisting of two facing sheets (36, 37), a foamable core material (39) and, if desired, edge strips (38) interposed between edge zones of the facing sheets, said mould comprising a lower mould part (29), an upper mould part (30) movable relative to the lower mould part, and spacers (31) which when the mould is closed are interposed between the mould parts so as to determine the spacing between said parts and to form the lateral boundaries of a mould cavity for receiving said workpiece, <u>characterized</u> in that the spacing between the upper and lower mould parts (30, 29) at the periphery of the workpiece is slightly larger than the total thickness of the workpiece at that location.

7. A mould as claimed in claim 6, <u>characterized</u> in that the difference between the spacing of the mould parts and the thickness of the workpiece is between 0.2 and 1 mm.

8. A mould as claimed in claim 6, <u>characterized</u> in that the mould parts and/or the spacers are formed with recesses (40) along the periphery of the workpiece for receiving excess foam material from the core the element.

9. A mould as claimed in claim 6, <u>characterized</u> in that in the surfaces of the mould parts facing the mould cavity there are apertures which are connectable to a vacuum source through duct systems (34, 35) in the mould parts.

10. A method of manufacturing, in a mould as claimed in claim 6, a sandwich element as claimed in claim 1 and having a non-planar facing sheet, <u>characterized</u> in that prior to the insertion of said facing sheet into the mould one or more weakened lines are formed, e.g. by scoring or embossing, in those regions of the sheet where the surface of hte finished element is curved or angled.

1/4

0004189

FIG.1

FIG.2

FIG.3

FIG.4

FIG. 5

FIG.6

FIG.7

FIG.8

FIG.9

FIG.10

FIG. 11

FIG.12

0004189

FIG.13

FIG.14

FIG.16

FIG.17

FIG.15

FIG.18